# EUROPÄISCHE PATENTANMELDUNG

(11) **EP 3 751 688 A1**
(43) Veröffentlichungstag der Anmeldung: **16.12.2020**
(21) Anmeldenummer: 20180052.1
(22) Anmeldetag: 15.06.2020
(51) Int. Cl.: H02G 3/08, G01R 31/08, H02J 13/00

(54) **ELEKTROINSTALLATIONSDOSE MIT NACHRÜSTBAREM DECKEL**

(30) Priorität: 14.06.2019 DE 102019116295
(71) Anmelder: Günther Spelsberg GmbH & Co. KG, 58579 Schalksmühle (DE)
(72) Erfinder: Werkshagen, Bernd, 58579 Schalksmühle (DE); Rauterkus, Frank, 58579 Schalksmühle (DE); Scharbatke, Kai, 58579 Schalksmühle (DE)
(74) Vertreter: Michalski Hüttermann & Partner Patentanwälte mbB

(57) **Zusammenfassung**

Die Erfindung betrifft eine Elektroinstallationsdose (12) mit einem einen Bauraum (18) begrenzenden und eine Öffnung (20) aufweisenden Gehäuse (16) und einem Deckel (24) zum Verschließen der Öffnung (20) des Gehäuses (16), umfassend einen Sensor (26), der dazu ausgestaltet ist, in der Umgebung des Deckels (24) eine physikalische und/oder chemische Eigenschaft zu erfassen und basierend darauf ein erstes Signal zu erzeugen, eine Sende- und Empfangsvorrichtung (28), die mit dem Sensor (26) kommunikations-technisch verbunden ist und dazu ausgestaltet ist, in Abhängigkeit des ersten Signals ein zweites Signal (34) zu erzeugen, und eine elektrische Energieversorgungseinrichtung (30), die mit dem Sensor (26) und/oder der Sende- und Empfangsvorrichtung (28) elektrisch leitend verbunden ist, wobei der Sensor (26), die Sende- und Empfangsvorrichtung (28) und die Energieversorgungseinrichtung (30) in den Deckel (24) integriert sind. Weiterhin betrifft die Erfindung ein Verfahren zum Nachrüsten einer Elektroinstallationsdose (12) mit einem Nachrüstdeckel (24), sowie ein Elektroinstallationsdosenüberwachungssystem (10). Auf diese Weise wird eine einfache Nachrüstbarkeit einer schon bestehenden Elektroinstallationsdose (12) mit einem Deckel (24) bereitgestellt, wobei der Deckel (24) einen Zusatznutzen für die Elektroinstallationsdose (12) zur Verfügung stellt.

## Beschreibung

Die Erfindung betrifft eine Elektroinstallationsdose mit einem einen Bauraum begrenzendem und eine Öffnung aufweisenden Gehäuse und einem Deckel zum Verschließen der Öffnung des Gehäuses, umfassend einen Sensor, der dazu ausgestaltet ist, in der Umgebung des Deckels eine physikalische und/oder chemische Eigenschaft zu erfassen und basierend darauf ein erstes Signal zu erzeugen, eine Sende- und Empfangsvorrichtung, die mit dem Sensor kommunikationstechnisch verbunden ist und dazu ausgestaltet ist, in Abhängigkeit des ersten Signals ein zweites Signal zu erzeugen, und eine elektrische Energieversorgungseinrichtung, die mit dem Sensor und/oder der Sende- und Empfangsvorrichtung elektrisch leitend verbunden ist, wobei der Sensor, die Sende- und Empfangsvorrichtung und die Energieversorgungseinrichtung in den Deckel integriert sind.

Weiterhin betrifft die Erfindung ein Verfahren zum Nachrüsten einer Elektroinstallationsdose mit einem Nachrüstdeckel, wobei die Elektroinstallationsdose ein einen Bauraum begrenzendes und eine Öffnung aufweisendes Gehäuse und einen Deckel aufweist, mit dem die Öffnung des Gehäuses verschlossen ist.

Die Erfindung betrifft des Weiteren ein Elektroinstallationsdosenüberwachungssystem.

Im Zuge der digitalen Vernetzung, um in Wohn- und Geschäftsräumen eine Erhöhung der Wohn- und Lebensqualität, des Komforts, der Sicherheit oder der Energieeffizienz zu erzielen, werden von technischen Geräten vermehrt Daten erhoben und ausgetauscht. Bei Elektroinstallationsdosen werden die dazu notwendigen elektronischen Komponenten und Sensoren in der Regel im Gehäuse individuell verbaut.

So beschreibt die EP 1 798 899 A1 eine Unterputz-Verteilerdose für Niederspannungsstromnetzte mit einem Dosenkörper mit Zu- bzw. Abgangsöffnungen für Niederspannungs-Stromleitungen und mit einem Deckel. Dabei ist vorgesehen, dass die Unterputz-Verteilerdose ein aktives Gerät zum Senden und/oder Empfangen von Daten in einen bzw. aus einem Raum aufweist, dass das aktive Gerät durch den Dosenkörper hindurch mit Leitern zur Datenübertragung verbunden ist und dass das aktive Gerät am Deckel der Unterputz-Verteilerdose angeordnet ist.

Ein Nachrüsten dieser Art Elektroinstallationsdosen mit weiteren elektronischen Komponenten und/oder Sensoren und somit mit weiteren Komfortfunktionen gestaltet sich schwierig, da dies einen Eingriff in die Installation und in der Regel ein Verändern der bestehenden Installationen in der Elektroinstallationsdose bedeutet.

Davon ausgehend ist es die Aufgabe der Erfindung, eine Elektroinstallationsdose sowie ein Verfahren bereitzustellen, die ein einfaches Nachrüsten ermöglichen.

Diese Aufgabe wird durch die Gegenstände der unabhängigen Patentansprüche gelöst. Bevorzugte Weiterbildungen finden sich in den Unteransprüchen.

Erfindungsgemäß wird also eine Elektroinstallationsdose mit einem einen Bauraum begrenzenden und eine Öffnung aufweisenden Gehäuse und einem Deckel zum Verschließen der Öffnung des Gehäuses bereitgestellt, umfassend einen Sensor, der dazu ausgestaltet ist, in der Umgebung des Deckels eine physikalische und/oder chemische Eigenschaft zu erfassen und basierend darauf ein erstes Signal zu erzeugen, eine Sende- und Empfangsvorrichtung, die mit dem Sensor kommunikationstechnisch verbunden ist und dazu ausgestaltet ist, in Abhängigkeit des ersten Signals ein zweites Signal zu erzeugen, und eine elektrische Energieversorgungseinrichtung, die mit dem Sensor und/oder der Sende- und Empfangsvorrichtung elektrisch leitend verbunden ist, wobei der Sensor, die Sende- und Empfangsvorrichtung und die Energieversorgungseinrichtung in den Deckel integriert sind.

Auf diese Weise wird eine einfache Nachrüstbarkeit einer schon bestehenden Dose mit einem Deckel bereitgestellt, wobei der Deckel einen Zusatznutzen für die Dose zur Verfügung stellt.

Grundsätzlich ist es dabei möglich, und dabei vorgesehen ist, dass der Sensor, die Sende- und Empfangsvorrichtung und die Energieversorgungseinrichtung mit wenigstens einer Einrichtung im Bauraum des Gehäuses verbunden ist, z.B. zur Versorgung mit elektrischer Energie. Alternativ ist gemäß einer bevorzugten Weiterbildung vorgesehen, dass der Sensor, die Sende- und Empfangsvorrichtung und die Energieversorgungseinrichtung keine physische Verbindung zu einer Einrichtung im Bauraum des Gehäuses aufweisen.

Die Idee dieser Ausgestaltung liegt somit darin, dass die Energieversorgungseinrichtung ohne physische Verbindung zu einer Einrichtung im Bauraum des Gehäuses zur Erzeugung von elektrischer Energie betreibbar ist. Somit ist es nicht notwendig, nachträglich Leitungen zur Übertragung der Energie zu verlegen. Weiterhin führt dies dazu, dass der Sensor, die Sende- und Empfangsvorrichtung und die Energieversorgungseinrichtung mit der Einrichtung im Bauraum des Gehäuses platzmäßig nicht in Konflikt stehen. Beim Austausch eines bisherigen Deckels durch einen neuen Deckel muss somit kein Eingriff in die bereits vorhandene Installation getätigt werden, womit die Elektroinstallationsdose ein einfaches Nachrüsten ermöglicht. Die Einrichtungen im Bauraum des Gehäuses haben somit auch keinen nachteiligen Einfluss auf den Sensor, die Sende- und Empfangsvorrichtung oder die Energieversorgungseinrichtung und können beispielsweise die Reichweite bei einer Drahtlosübertragung der Signale auch nicht negativ beeinflussen.

Weiterhin wird erfindungsgemäß ein Verfahren zum Nachrüsten einer Elektroinstallationsdose mit einem Nachrüstdeckel bereitgestellt, wobei die Elektroinstallationsdose ein einen Bauraum begrenzendes und eine Öffnung aufweisendes Gehäuse und einen Deckel aufweist, mit dem die Öffnung des Gehäuses verschlossen ist, mit den Schritten:
a) Entfernen des Deckels von dem Gehäuse, und
b) Verschließen der Öffnung des Gehäuses mit dem Nachrüstdeckel, wobei der Nachrüstdeckel umfasst:
   einen Sensor, der dazu ausgestaltet ist, in der Umgebung des Nachrüstdeckels eine physikalische und/oder chemische Eigenschaft zu erfassen und basierend darauf ein erstes Signal zu erzeugen, eine Sende- und Empfangsvorrichtung, die mit dem Sensor kommunikationstechnisch verbunden ist und dazu ausgestaltet ist, in Abhängigkeit des ersten Signals ein zweites Signal zu erzeugen, und eine elektrische Energieversorgungseinrichtung, die mit dem Sensor und/oder der Sende- und Empfangsvorrichtung elektrisch leitend verbunden ist, wobei der Sensor, die Sende- und Empfangsvorrichtung und die Energieversorgungseinrichtung in den Nachrüstdeckel integriert sind.

Auch hier gilt, dass gemäß einer bevorzugen Ausgestaltung der Erfindung der Sensor, die Sende- und Empfangsvorrichtung und die Energieversorgungseinrichtung keine physische Verbindung zu einer Einrichtung im Bauraum des Gehäuses erhalten. Insbesondere wird damit durch Tauschen des Deckels der bisherige Bauraum des Gehäuses nicht eingeschränkt. Der Sensor, die Sende- und Empfangsvorrichtung und die Energieversorgungseinrichtung sind alle in dem Nachrüstdeckel integriert und werden gerade nicht mit einer Einrichtung im Bauraum des Gehäuses verbunden. Das Nachrüsten ist somit besonders einfach und schnell.

Weiterhin wird erfindungsgemäß ein Elektroinstallationsdosenüberwachungssystem umfassend eine erfindungsgemäße Elektroinstallationsdose und einen Netzwerkserver bereitgestellt. Mittels des Elektroinstallationsdosenüberwachungssystem kann auf besonders einfache Weise die Funktionsfähigkeit der Elektroinstallationsdose überwacht werden und ein Frühwarnsystem implementiert werden. Des Weiteren bietet das erfindungsgemäße Elektroinstallationsdosenüberwachungssystem die Möglichkeit, Wartungsintervalle vorauszusagen und ermöglicht eine einfache Dokumentation.

Der Sensor ist im Sinne der Erfindung dazu ausgestaltet, eine physikalische und/oder chemische Eigenschaft zu erfassen und basierend darauf ein erstes Signal zu erzeugen. Grundsätzlich kann der Sensor die physikalische und/oder chemische Eigenschaft qualitativ erfassen. Alternativ kann der Sensor die physikalische und/oder chemische Eigenschaft quantitativ als Messgröße erfassen und beispielsweise proportional zu einem physikalischen und/oder chemischen Effekt das erste Signal als Messgröße erzeugen. Bevorzugt ist das erste Signal ein weiterverarbeitbares Signal, beispielsweise ein elektrisches Signal. Weiterhin kann vorgesehen sein, dass es sich beim Sensor um einen aktiven Sensor handelt, also um einen Sensor, der aufgrund des Messprinzips ein elektrisches Signal erzeugt. Diese Art Sensor ist schon selbst Spannungserzeuger und benötig keine Verbindung zur elektrischen Energieversorgungseinrichtung. Alternativ kann der Sensor ein passiver Sensor sein, der nicht schon aufgrund des Messprinzips ein elektrisches Signal erzeugt und somit eine Verbindung zur elektrischen Energieversorgungseinrichtung benötigt. Weiterhin ist es auch möglich, einen kombinierten Sensor zu verwenden, der direkt mehrere physikalische und/oder chemische Eigenschaften erfassen kann, wie beispielsweise ein kombinierter Temperatur- und Feuchtigkeitssensor.

Der Sensor erfasst die physikalische und/oder chemische Eigenschaft in der Umgebung des Deckels. Grundsätzlich kann also vorgesehen sein, dass der Sensor die physikalische und/oder chemische Eigenschaft außerhalb des Bauraums des Gehäuses und somit außerhalb der Elektroinstallationsdose erfasst. Gemäß einer bevorzugten Weiterbildung der Erfindung ist jedoch vorgesehen, dass der Sensor dazu ausgestaltet ist, die physikalische und/oder chemische Eigenschaft der Umgebung innerhalb des Bauraums des Gehäuses zu erfassen. So kann mit dem Signal des Sensors besonders gut die Funktionsfähigkeit der Einrichtungen im Bauraum des Gehäuses beurteilt werden. So können beispielsweise die physikalischen Eigenschaften Temperatur oder die Luftfeuchtigkeit innerhalb des Bauraums des Gehäuses erfasst werden.

Die Eigenschaften der Umgebung innerhalb des Bauraums beeinflussen die Funktionsfähigkeit der Einrichtungen weit mehr als die Eigenschaften der Umgebung außerhalb des Bauraums. Des Weiteren kann hierdurch beurteilt werden, ob weitere Schutzmaßnahmen, wie ein besonders dichter Deckel oder ein besonders gut isolierendes Gehäuse, die zum Schutz der Einrichtung im Bauraum der Elektroinstallationsdose verwendet werden, ihre Funktion ausführen oder ob eventuell eine Störung vorliegt. Grundsätzlich können verschiedene physikalische und/oder chemische Eigenschaften erfasst werden beispielsweise Wärmemenge, Temperatur, Feuchtigkeit, Druck, Schallfeld-, Magnetfeld-, elektrische Feldgrößen, Helligkeit, Beschleunigung, pH-Wert, Ionenstärke und/oder elektrochemisches Potential.

Um ein besonders einfaches Nachrüsten zu ermöglichen, ist gemäß einer bevorzugten Weiterbildung der Erfindung vorgesehen, dass der Sensor, die Sende- und Empfangsvorrichtung und die Energieversorgungseinrichtung derart in den Deckel integriert sind, dass sie in verschlossenem Zustand des Gehäuses nicht in den Bauraum des Gehäuses hineinragen. Der Sensor, die Sende- und Empfangsvorrichtung und die Energieversorgungseinrichtung weisen also nicht nur vorzugsweise keine physische Verbindung zu einer Einrichtung im Bauraum des Gehäuses auf, sondern sind vorzugsweise auch derart in den Deckel integriert, dass durch den Sensor, die Sende- und Empfangsvorrichtung und die Energieversorgungseinrichtung das Volumen des Bauraums nicht beansprucht wird. So kann auch eine Elektroinstallationsdose, die besonders dicht mit Einrichtungen im Bauraum bestückt ist, mit einem Deckel ausgestattet werden. Beispielsweise kann vorgesehen sein, dass das Volumen, das der Sensor, die Sende- und Empfangsvorrichtung und die Energieversorgungseinrichtung in Anspruch nehmen, von der dem Bauraum abgewandten Seite des Deckels bereitgestellt wird.

Hinsichtlich der Art des Sensors ist gemäß einer bevorzugten Weiterbildung der Erfindung vorgesehen, dass der Sensor einen Wegsensor, einen Bewegungsmelder, einen Drucksensor, einen Feuchtesensor, einen Gassensor, einen Lichtsensor und/oder einen Temperatursensor umfasst. Der Wegsensor ermöglicht beispielsweise die Messung eines Abstandes zwischen einem Objekt und einem Bezugspunkt oder von Längenänderungen. So kann mittels des Wegsensors zum Beispiel ermittelt werden, ob der Deckel der Elektroinstallationsdose geöffnet wird, da sich dabei der Abstand zwischen Deckel und einem Bezugspunkt innerhalb des Gehäuses ändert.

Alternativ oder zusätzlich kann der Bewegungsmelder und/oder der Lichtsensor dazu eingesetzt werden, ein Öffnen des Gehäuses zu erkennen. Der Bewegungsmelder erfasst eine Bewegung in der Umgebung des Bewegungsmelders und kann aktiv mit elektromagnetischen Wellen (HF, Mikrowellen oder Dopplerradar), mit Ultraschall (Ultraschall-Bewegungsmelder) oder passiv anhand der Infrarotstrahlung der Umgebung arbeiten. Der Lichtsensor wandelt elektromagnetische Strahlung unter Benutzung des photoelektrischen Effekts in ein elektrisches Signal um und kann einen von der einfallenden Strahlung abhängigen elektrischen Widerstand zeigen.

Der Drucksensor erfasst den Druck und kann beispielsweise zum Messen eines stationären Drucks, einer Druckdifferenz oder von Druckschwankungen bis zum Schalldruck eingesetzt werden. So kann mittels des Drucksensors beispielsweise der Luftdruck bestimmt werden. Des Weiteren kann mittels des Drucksensors der Druck auf den Deckel des Gehäuses, der beispielsweise beim Öffnen des Gehäuses entsteht, ermittelt werden. Somit eignet sich auch ein Drucksensor, um ein Öffnen des Gehäuses zu registrieren.

Der Feuchtesensor kann dazu eingesetzt werden die Luftfeuchtigkeit zu bestimmen. Zusammen mit dem Temperatursensor, der dazu eingesetzt werden kann, die Temperatur zu ermitteln, können so wichtige Informationen bezüglich der Umgebung der Elektroinstallationsdose gesammelt werden. Diese Eigenschaften Temperatur und Luftfeuchtigkeit wirken sich besonders auf die Lebensdauer der Elektroinstallationsdose bzw. der Einrichtungen im Bauraum der Elektroinstallationsdose aus, so dass damit beispielsweise Vorhersagen hinsichtlich der Wartungsintervalle getroffen werden können.

Des Weiteren weist eine erhöhte oder erniedrigte Temperatur auf eine Fehlfunktion der Elektroinstallationsdose bzw. der Einrichtungen im Bauraum der Elektroinstallationsdose hin. Ein Gassensor ist ein Chemosensor und kann gasförmige Substanzen detektieren. Der Anteil bestimmter chemischer Inhaltsstoffe des Gases wird vom Gassensor in ein elektrisches Signal umgewandelt. So kann der Gassensor beispielsweise in Situationen, in denen Explosionsschutz wichtig ist, dazu eingesetzt werden, das Austreten von brennbaren Gasen zu erkennen.

In Zusammenhang mit der Energieversorgungseinrichtung ist gemäß einer bevorzugten Weiterbildung der Erfindung vorgesehen, dass die Energieversorgungseinrichtung derart ausgestaltet ist, dass sie elektrische Energie aus chemischer Energie, aus dem piezoelektrischen Effekt, dem pyroelektrischer Effekt, dem thermoelektrischen Effekt, dem photoelektrischen Effekt und/oder über Induktion erzeugen kann. Wie bereits erwähnt ist die Energieversorgungseinrichtung vorzugsweise ohne physische Verbindung zu einer Einrichtung im Bauraum des Gehäuses zur Erzeugung von elektrischer Energie betreibbar. Es kann also eine autarke Energieversorgungseinrichtung verwendet werden, die unabhängig der Einrichtungen im Bauraum des Gehäuses und unabhängig der Umgebung der Elektroinstallationsdose elektrische Energie erzeugen kann, wie zum Beispiel eine Energieversorgungseinrichtung, die elektrische Energie aus chemischer Energie erzeugt, so wie eine Batterie oder eine galvanische Zelle.

Alternativ kann eine Energieversorgungseinrichtung verwendet werden, die über Interaktion mit der Umgebung Energie erzeugt. So wird beim piezoelektrischen Effekt elektrische Energie aus einer Krafteinwirkung, wie Druck oder Vibration erzeugt. Beim pyroelektrischen und thermoelektrischen Effekt führt die Veränderung der Temperatur oder eine Temperaturdifferenz zur Erzeugung von elektrischer Energie. Beim photoelektrischen Effekt wird aufgrund der Wechselwirkung von Materie mit elektromagnetischer Strahlung, wie Licht, elektrische Energie erzeugt. Eine weitere Möglichkeit um elektrische Energie über Interaktion mit der Umgebung zu erzeugen ist die elektromagnetische Induktion. Hierbei kann mittels Magnetfeldern, die beispielsweise von den Einrichtungen innerhalb der Elektroinstallationsdosen erzeugt werden, elektrische Energie gewonnen werden.

Im Hinblick darauf, dass bei den oben genannten Effekten die elektrische Energie nicht notwendigerweise konstant erzeugt wird, ist gemäß einer bevorzugten Weiterbildung der Erfindung vorgesehen, dass die Energieversorgungseinrichtung einen Energiespeicher umfasst. Somit ist es möglich, die von der Energieversorgungseinrichtung erzeugte Energie im Energiespeicher zwischen zu speichern. Alternativ kann vorgesehen sein, dass die Energieversorgungseinrichtung aus dem Energiespeicher besteht, wie beispielsweise bei einer Batterie. Der Energiespeicher ist bevorzugt wiederaufladbar. Zum Beispiel kann als Energiespeicher ein Akkumulator oder ein Kondensator eingesetzt werden.

Gemäß einer weiteren bevorzugten Weiterbildung der Erfindung ist vorgesehen, dass die Energieversorgungseinrichtung eine galvanische Zelle, eine Batterie, einen Akkumulator, ein Thermoelement, einen thermoelektrischen Generator, einen piezoelektrischen Kristall, einen pyroelektrischen Kristall, eine Radionuklidbatterie, eine Antenne, eine Spule und/oder ein Solarmodul umfasst. Um aus chemischer Energie elektrische Energie bereitzustellen, kann eine galvanische Zelle, eine Batterie oder ein Akkumulator verwendet werden. Diese haben den Vorteil, dass sie einfach zu handhaben sind und für viele Anwendungen vorkonfektioniert bereitgestellt werden.

Ein piezoelektrischer Kristall erzeugt elektrische Energie aus einer Krafteinwirkung, wie Druck oder Vibration. Ein pyroelektrischen Kristall erzeugt elektrische Energie aus einer Temperaturänderung. So kann also beispielsweise über die zwischen Tag und Nacht stattfindende Temperaturänderung elektrische Energie erzeugt werden. Ein Thermoelement und ein thermoelektrischer Generator erzeugen jeweils aufgrund einer Temperaturdifferenz zwischen zwei Leiterenden elektrische Energie. So kann beispielsweise die Temperaturdifferenz, die zwischen dem Bauraum des Gehäuses der Elektroinstallationsdose und der Umgebung herrscht, zur Erzeugung der elektrischen Energie genutzt werden. Eine Antenne und/oder eine Spule können eingesetzt werden um mittels magnetischer Induktion elektrische Energie zu gewinnen.

Des Weiteren stellt die Radionuklidbatterie eine Möglichkeit dar, eine besonders langfristige und wartungsarme Energieversorgung zu gewährleisten. Die Radionuklidbatterie wandelt thermische Energie des spontanen Kernzerfalls eines Radionuklids in elektrische Energie um. Ein Solarmodul wandelt das Licht der Sonne direkt in elektrische Energie um. Dies stellt eine weitere umweltfreundliche Alternative dar, um elektrische Energie zu erzeugen. Das Solarmodul kann beispielsweise auf der Außenseite des Deckels der Elektroinstallationsdose angebracht sein.

Gemäß einer bevorzugten Weiterbildung der Erfindung ist vorgesehen, dass die Sende- und Empfangsvorrichtung dazu ausgestaltet ist, als zweites Signal ein Funksignal zu erzeugen. Dies ermöglicht ein besonders einfaches Übertragen der Signale. So können über eine Funkverbindung die von dem Sensor als Messgrößen erfassten physikalischen und/oder chemischen Eigenschaften als Funksignale an einen Datenspeicher weitergegeben werden. Bevorzugt ist dabei vorgesehen, dass das Funksignal über ein Low Power Wide Area Network, also über ein Netzwerkprotokoll zur Verbindung von Niedrigenergiegeräten wie batteriebetriebenen Sensoren, an einen Netzwerkserver übertragen wird. Dies hat den Vorteil, dass eine große Reichweite und ein niedriger Energieverbrauch bei niedrigen Betriebskosten erreicht werden können. Beispielsweise kann als Netzwerkprotokoll Narrowband IoT (NB-IoT), oder LoRaWAN verwendet werden. Eine weitere Möglichkeit, insbesondere für kurze Distanzen, besteht in der Verwendung von Bluetooth.

Um möglichst großen Nutzen aus den vom Sensor bereitgestellten Daten zu ziehen, ist gemäß einer bevorzugten Weiterbildung der Erfindung vorgesehen, dass eine Einrichtung des Deckels, wie die Sende- und Empfangsvorrichtung, dazu ausgestaltet ist, zur Bestimmung des Standortes verwendet zu werden. Grundsätzlich bestehen mehrere Möglichkeiten, den Standort der Elektroinstallationsdose zu bestimmen. Beispielsweise können die Signale der Sende- und Empfangsvorrichtung verwendet werden, um eine Lokalisation der Elektroinstallationsdose durchzuführen. So kann eine Ortung innerhalb des Globalen Navigationssatellitensystems (etwa Global Positioning System, GPS), eine Ortung im Mobilfunknetz (GSM-Ortung) und/oder eine WLAN-basierte Ortung vorgenommen werden.

Weiterhin kann vorgesehen sein, dass die vom Sensor übermittelten Messgrößen in die Ortung mit einbezogen werden. So kann beispielsweise über die Temperatur ermittelt werden, ob sich die Elektroinstallationsdose in einem Heizungskeller oder in einem Kühlraum befindet. Alternativ oder zusätzlich kann vorgesehen sein, dass die Sende- und Empfangsvorrichtung eine elektroinstallationsdosenspezifische Kennzeichnung als Identifikationssignal versendet und in einer Datenbank der Standort für das entsprechende Identifikationssignal abgelegt ist.

Im Hinblick auf das Übertragen des Funksignals ist gemäß einer weiteren bevorzugten Weiterbildung der Erfindung vorgesehen, dass die Sende- und Empfangsvorrichtung eine Antenne umfasst. Insbesondere ist die Antenne bevorzugt derart ausgestaltet, dass bei einer gegebenen Bauform des Deckels der Elektroinstallationsdose eine große Reichweite für die Übertragung der Funksignale ermöglicht wird. Insbesondere kommt hierbei zum Tragen, dass die Sende- und Empfangsvorrichtung derart in den Deckel integriert ist, dass durch die Sende- und Empfangsvorrichtung das Volumen des Bauraums nicht beansprucht wird. Somit haben die Einrichtungen im Bauraum des Gehäuses auch keinen negativen Einfluss auf Reichweite des Funksignals.

Im Hinblick auf das Verfahren zum Nachrüsten einer Elektroinstallationsdose mit einem Nachrüstdeckel, umfasst das Verfahren gemäß einer bevorzugten Weiterbildung der Erfindung zusätzlich die folgenden Schritte:
c) Erzeugen von elektrischer Energie mittels der Energieversorgungseinrichtung,
d) Erfassen einer physikalische und/oder chemische Eigenschaft mittels des Sensors in der Umgebung des Nachrüstdeckels,
e) Erzeugen eines ersten Signals basierend auf der erfassten physikalischen und/oder chemischen Eigenschaft und
f) Erzeugen eines zweiten Signals in Abhängigkeit des ersten Signals mittels der Sende- und Empfangsvorrichtung.

In diesem Zusammenhang ist gemäß einer weiteren bevorzugten Weiterbildung des Verfahrens vorgesehen, dass Verfahrensschritt f) ein Erzeugen eines Funksignals umfasst. Das Verfahren ermöglicht so eine einfache Messung der physikalischen und/oder chemischen Eigenschaft und eine besonders einfaches Übertragen mittels des Funksignals. So besteht auch die Möglichkeit der Protokollierung von Gehäuseöffnungen zwecks Wartungsdokumentation oder ein unbefugter Eingriff kann erkannt werden.

Gemäß einer weiteren bevorzugten Weiterbildung der Erfindung ist vorgesehen, dass Verfahrensschritt d) ein Erfassen der physikalischen und/oder chemischen Eigenschaft in der Umgebung innerhalb des Bauraums des Gehäuses umfasst. Die Eigenschaften der Umgebung innerhalb des Bauraums beeinflussen die Funktionsfähigkeit der Einrichtungen weit mehr als die Eigenschaften der Umgebung außerhalb des Bauraums, so dass hierüber besonders gut die Funktionsfähigkeit der Einrichtungen im Bauraum des Gehäuses beurteilt werden können. Insbesondere können hierüber Vorhersagen hinsichtlich des Wartungsintervalls der Elektroinstallationsdose getroffen werden.

Gemäß einer weiteren bevorzugten Weiterbildung der Erfindung ist vorgesehen, dass Verfahrensschritt c) ein Erzeugen der elektrischen Energie aus chemischer Energie, aus dem piezoelekrischen Effekt, dem pyroelektrischer Effekt, dem thermoelektrischen Effekt, dem photoelektrischen Effekt und/oder über Induktion umfasst. So wird auf umweltfreundliche und wartungsarme Weise Energie bereitgestellt.

Gemäß einer weiteren bevorzugten Weiterbildung der Erfindung ist vorgesehen, dass das Verfahren zusätzlich den folgenden Schritt umfasst:
g) Speichern der elektrischen Energie in einem Energiespeicher. Insbesondere beim Erzeugen der elektrischen Energie, aus dem piezoelektrischen Effekt, dem pyroelektrischer Effekt, dem thermoelektrischen Effekt, dem photoelektrischen Effekt oder über Induktion, wird die elektrische Energie nicht notwendigerweise kontant erzeugt. Zum Ausgleich kann die Energie in einem Energiespeicher gespeichert und/oder zwischengespeichert werden.

Um einen möglichst großen Nutzen aus den vom Sensor bereitgestellten Daten zu ziehen und eine Wartung der Elektroinstallationsdose zu erleichtern ist gemäß einer weiteren bevorzugten Weiterbildung der Erfindung vorgesehen, dass das Verfahren zusätzlich den folgenden Schritt umfasst:
h) Bestimmen des Standortes der Elektroinstallationsdose mittels der Sende- und Empfangsvorrichtung.

Weitere Ausführungsformen und Vorteile des Verfahrens zum Nachrüsten einer Elektroinstallationsdose mit einem Nachrüstdeckel ergeben sich für den Fachmann in Analogie zu der zuvor beschriebenen Elektroinstallationsdose und dem zuvor beschriebenen Elektroinstallati onsdosenüberwachungssystem.

### In der Zeichnung zeigt

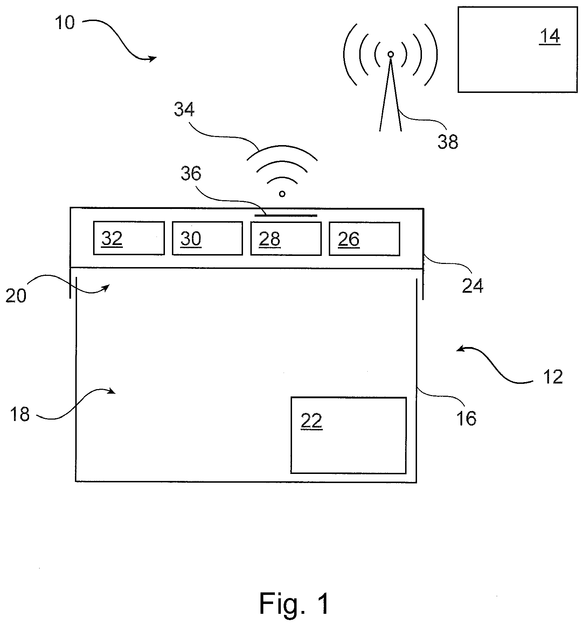

- Fig. 1: schematisch ein Elektroinstallationsdosenüberwachungssystem mit eine Elektroinstallationsdose gemäß einem bevorzugten Ausführungsbeispiel der Erfindung.

Figur 1 zeigt ein Elektroinstallationsdosenüberwachungssystem 10 umfassend eine Elektroinstallationsdose 12 sowie einen Netzwerkserver 14. Die Elektroinstallationsdose 12 weist ein Gehäuse 16 auf, das einen Bauraum 18 begrenzt und eine Öffnung 20 aufweist. In dem Bauraum 18 findet sich im hier bevorzugten Ausführungsbeispiel eine Einrichtung 22 zum Betreiben einer Elektroinstallation. Die Öffnung 20 des Gehäuses 16 wird durch einen Deckel 24 verschlossen.

Der Deckel 24 umfasst einen Sensor 26, im hier bevorzugten Ausführungsbeispiel ist dies ein Temperatur und Feuchtigkeitssensor, der die Temperatur und Feuchtigkeit im Bauraum 18 des Gehäuses 16 erfasst und basierend darauf ein erstes Signal erzeugt. Des Weiteren umfasst der Deckel 24 eine Sende- und Empfangsvorrichtung 28, die kommunikationstechnisch mit dem Sensor 26 verbunden ist, sowie eine Energieversorgungseinrichtung 30. Im vorliegenden Ausführungsbeispiel handelt es sich bei der Energieversorgungseinrichtung 30 um ein Solarmodul, welches zum Zwischenspeichern der durch Licht erzeugten elektrischen Energie einen Akkumulator als Energiespeicher 32 umfasst.

Die Sende- und Empfangsvorrichtung 28, erzeugt in Abhängigkeit des ersten Signals ein zweites Signal 34, im hier bevorzugten Ausführungsbeispiel ein Funksignal. Das Funksignal 34 wird von der Antenne 36, die Teil der Sende- und Empfangsvorrichtung 28 ist, abgegeben. Insbesondere ist vorgesehen, dass der Sensor 26, die Sende- und Empfangsvorrichtung 28 und die Energieversorgungsein-richtung 30 in den Deckel 24 der Elektroinstallationsdose 12 integriert sind. Dabei weisen weder der Sensor 26, die Sende- und Empfangsvorrichtung 28 noch die Energieversorgungseinrichtung 30 eine physische Verbindung zu der Einrichtung 22 im Bauraum 18 des Gehäuses 16 auf.

Weiterhin umfasst das Elektroinstallationsdosenüberwachungssystem 10 den Netzwerkserver 14. Das von der Sende- und Empfangsvorrichtung 28 abgestrahlte Funksignal 34 wird im hier gezeigten Ausführungsbeispiel mittels eines Mobilfunkmastes 38 an den Netzwerkserver 14 übertragen.

Das beschriebene Ausführungsbeispiel ist lediglich ein Beispiel, das im Rahmen der Ansprüche auf vielfältige Weise modifiziert und/oder ergänzt werden kann. Jedes Merkmal, das für ein bestimmtes Ausführungsbeispiel beschrieben wurde, kann eigenständig oder in Kombination mit anderen Merkmalen in einem beliebigen anderen Ausführungsbeispiel genutzt werden. Jedes Merkmal, dass für ein Ausführungsbeispiel einer bestimmten Kategorie beschrieben wurde, kann auch in entsprechender Weise in einem Ausführungsbeispiel einer anderen Kategorie eingesetzt werden.

### Bezugszeichenliste

- 10: Elektroinstallationsdosenüberwachungssystem
- 12: Elektroinstallationsdose
- 14: Netzwerkserver
- 16: Gehäuse
- 18: Bauraum
- 20: Öffnung
- 22: Einrichtung
- 24: Deckel
- 26: Sensor, Temperatur- und Feuchtigkeitssensor
- 28: Sende- und Empfangsvorrichtung
- 30: Energieversorgungseinrichtung, Solarmodul
- 32: Energiespeicher, Akkumulator
- 34: zweites Signal, Funksignal
- 36: Antenne
- 38: Mobilfunkmast

## Patentansprüche

1. Elektroinstallationsdose (12) mit einem einen Bauraum (18) begrenzenden und eine Öffnung (20) aufweisenden Gehäuse (16) und einem Deckel (24) zum Verschließen der Öffnung (20) des Gehäuses (16), umfassend
einen Sensor (26), der dazu ausgestaltet ist, in der Umgebung des Deckels (24) eine physikalische und/oder chemische Eigenschaft zu erfassen und basierend darauf ein erstes Signal zu erzeugen,
eine Sende- und Empfangsvorrichtung (28), die mit dem Sensor (26) kommunikationstechnisch verbunden ist und dazu ausgestaltet ist, in Abhängigkeit des ersten Signals ein zweites Signal (34) zu erzeugen, und
eine elektrische Energieversorgungseinrichtung (30), die mit dem Sensor (26) und/oder der Sende- und Empfangsvorrichtung (28) elektrisch leitend verbunden ist, **dadurch gekennzeichnet, dass** der Sensor (26), die Sende- und Empfangsvorrichtung (28) und die Energieversorgungseinrichtung (30) in den Deckel (24) integriert sind.

2. Elektroinstallationsdose (12) nach Anspruch 1 **dadurch gekennzeichnet, dass** der Sensor (26), die Sende- und Empfangsvorrichtung (28) und die Energieversorgungseinrichtung (30) keine physische Verbindung zu einer Einrichtung (22) im Bauraum (18) des Gehäuses (16) aufweisen.

3. Elektroinstallationsdose (12) nach Anspruch 1 oder **dadurch gekennzeichnet, dass** der Sensor (26) dazu ausgestaltet ist, die physikalische und/oder chemische Eigenschaft der Umgebung innerhalb des Bauraums (18) des Gehäuses (16) zu erfassen.

4. Elektroinstallationsdose (12) nach einem der vorhergehenden Ansprüche, **dadurch gekennzeichnet, dass** der Sensor (26), die Sende- und Empfangsvorrichtung (28) und die Energieversorgungseinrichtung (30) derart in den Deckel (24) integriert sind, dass sie in verschlossenem Zustand des Gehäuses (16) nicht in den Bauraum (18) des Gehäuses (16) hineinragen.

5. Elektroinstallationsdose (12) nach einem der vorhergehenden Ansprüche, **dadurch gekennzeichnet, dass** der Sensor (26) einen Wegsensor, einen Bewegungsmelder, einen Drucksensor, einen Feuchtesensor, einen Gassensor, einen Lichtsensor und/oder einen Temperatursensor umfasst.

6. Elektroinstallationsdose (12) nach einem der vorhergehenden Ansprüche, **dadurch gekennzeichnet, dass** die Energieversorgungseinrichtung (30) derart ausgestaltet ist, dass sie elektrische Energie aus chemischer Energie, aus dem piezoelektrischen Effekt, dem pyroelektrischer Effekt, dem thermoelektrischen Effekt, dem photoelektrischen Effekt und/oder über Induktion erzeugen kann.

7. Elektroinstallationsdose (12) nach einem der vorhergehenden Ansprüche, **dadurch gekennzeichnet, dass** die Energieversorgungseinrichtung (30) einen Energiespeicher (32) umfasst.

8. Elektroinstallationsdose (12) nach einem der vorhergehenden Ansprüchen, **dadurch gekennzeichnet, dass** die Energieversorgungseinrichtung (30) eine galvanische Zelle, eine Batterie, einen Akkumulator, ein Thermoelement, einen thermoelektrischen Generator, einen piezoelektrischen Kristall, einen pyroelektrischen Kristall, eine Radionuklidbatterie, eine Antenne, eine Spule und/oder ein Solarmodul umfasst.

9. Elektroinstallationsdose (12) nach einem der vorhergehenden Ansprüche, **dadurch gekennzeichnet, dass** die Sende- und Empfangsvorrichtung (28) dazu ausgestaltet ist, als zweites Signal (34) ein Funksignal zu erzeugen.

10. Elektroinstallationsdose (12) nach einem der vorhergehenden Ansprüche, **dadurch gekennzeichnet, dass** die Elektroinstallationsdose eine Einrichtung aufweist, die dazu ausgestaltet ist, zur Bestimmung des Standortes verwendet zu werden.

11. Elektroinstallationsdose (12) nach einem der vorhergehenden Ansprüche, **dadurch gekennzeichnet, dass** die Sende- und Empfangsvorrichtung (28) eine Antenne (36) umfasst.

12. Verfahren zum Nachrüsten einer Elektroinstallationsdose (12) mit einem Nachrüstdeckel (24), wobei die Elektroinstallationsdose (12) ein einen Bauraum (18) begrenzendes und eine Öffnung (20) aufweisendes Gehäuse (16) und einen Deckel aufweist, mit dem die Öffnung (20) des Gehäuses (16) verschlossen ist, mit den Schritten:
a) Entfernen des Deckels von dem Gehäuse (16), und
b) Verschließen der Öffnung des Gehäuses (16) mit dem Nachrüstdeckel (24), wobei der Nachrüstdeckel (24) umfasst:
einen Sensor (26), der dazu ausgestaltet ist, in der Umgebung des Nachrüstdeckels (24) eine physikalische und/oder chemische Eigenschaft zu erfassen und basierend darauf ein erstes Signal zu erzeugen,
eine Sende- und Empfangsvorrichtung (28), die mit dem Sensor (26) kommunikationstechnisch verbunden ist und dazu ausgestaltet ist, in Abhängigkeit des ersten Signals ein zweites Signal (34) zu erzeugen, und
eine elektrische Energieversorgungseinrichtung (30), die mit dem Sensor (26) und/oder der Sende- und Empfangsvorrichtung (28) elektrisch leitend verbunden ist,
wobei der Sensor (26), die Sende- und Empfangsvorrichtung (28) und die Energieversorgungseinrichtung (30) in den Nachrüstdeckel (24) integriert sind.

13. Verfahren nach Anspruch 12, wobei der Sensor (26), die Sende- und Empfangsvorrichtung (28) und die Energieversorgungseinrichtung (30) keine physische Verbindung zu einer Einrichtung (22) im Bauraum (18) des Gehäuses (16) erhalten.

14. Verfahren nach Anspruch 11 oder 12, wobei das Verfahren zusätzlich die folgenden Schritte umfasst:
c) Erzeugen von elektrischer Energie mittels der Energieversorgungseinrichtung (30),
d) Erfassen einer physikalische und/oder chemische Eigenschaft mittels des Sensors (26) in der Umgebung des Nachrüstdeckels (24),
e) Erzeugen eines ersten Signals basierend auf der erfassten physikalischen und/oder chemischen Eigenschaft, und
f) Erzeugen eines zweiten Signals (34) in Abhängigkeit des ersten Signals mittels der Sende- und Empfangsvorrichtung (28).

15. Elektroinstallationsdosenüberwachungssystem (10) umfassend eine Elektroinstallationsdose (12) nach einem der Ansprüche 1 bis 11 und einen Netzwerkserver (14).
